# EUROPEAN PATENT SPECIFICATION

(11) **EP 1 607 317 B1**
(45) Date of publication and mention of the grant of the patent: **26.05.2010**
(21) Application number: 05105066.4
(22) Date of filing: 09.06.2005
(51) Int. Cl.: B62J 27/00, B62K 21/12, B62K 11/14

(54) **Occupant restraining device for two-wheel vehicle**
Insassenrückhaltevorrichtung für Zweiradfahrzeug
Dispositif de retenue pour occupant de véhicule à deux roues

(30) Priority: 17.06.2004 JP 2004179849
(43) Date of publication of application: 21.12.2005
(73) Proprietor: HONDA MOTOR CO., LTD., Tokyo (JP)
(72) Inventor: Tsunoda, Kazuhiko, Wako-shi Saitama, (JP); Kurata, Norihiro, Wako-shi Saitama, (JP); Akiyama, Hideki, Wako-shi Saitama, (JP); Murata, Yutaka, Wako-shi Saitama, (JP); Ogino, Takashi, Wako-shi Saitama, (JP)
(74) Representative: Poulin, Gérard

(56) References cited:
- WO-A-00/21824
- GB-A- 2 003 096
- US-A- 5 219 104

## Description

### TECHNICAL FIELD

The present invention relates to an occupant restraining device for a two-wheel vehicle and, more specifically, to an occupant restraining device for a two-wheel vehicle for restraining the movement of an occupant forwardly of a vehicle body.

In a motorcycle, as a technique to restrain the movement of an occupant forwardly of a vehicle body, Patent Document JP-A-11-278342 discloses a technique in which an airbag is disposed near a meter panel of a two-wheel vehicle, and the airbag is activated upon detection of an impact. The document US 5219104 describes all the features of the preamble of claim 1.

### PRIOR ART

In the technique in Patent Document JP-A-11-278342, since a space for mounting an airbag unit or a control unit thereof must be secured in the vicinity of the meter panel, and an acceleration sensor must be mounted, it is difficult to apply it to a two-wheel vehicle of a small size.

An object of the present invention is to solve the aforementioned problem in the related art, and to provide an occupant restraining device for a two-wheel vehicle which can be applied to a small vehicle easily and can reduce a load applied to the occupant without upsizing a pad.

### DISCLOSURE OF THE INVENTION

In order to achieve the object described above, the present invention is an occupant movement restraining device for restraining the movement of an occupant of a two-wheel vehicle forwardly of a vehicle body comprising a restraining pad mounted to a handle so as to oppose to the occupant, a pipe-shaped steering member steerably supported by a head pipe, a pipe-shaped handle connecting member for connecting the handle with the steering member, and a load absorbing member for absorbing a forward load applied to the restraining pad and allowing the handle connecting member to be plastically deformed so as to incline toward the front at a predetermined position are provided.

Part of the load applied to the restraining pad is consumed and absorbed as energy for causing the handle connecting member to incline toward the front in the load absorbing member, so that a load applied to the occupant can be reduced.

The load absorbing member can cause the handle connecting member in the plastic range exceeding a yield point to maintain a predetermined resiliency.

According to this feature, since the handle connecting member in the plastic range exceeding the yield point can maintain resiliency, the load applied to the restraining pad can be absorbed also after having exceeded the yield point.

For example, the load absorbing member is inserted at one end into the steering member and at the other end into the handle connecting member, and an end of the steering member and an end of the handle connecting member are fitted to each other.

Or the load absorbing member can be inserted into the handle connecting member inside the predetermined position thereof and the end of the steering member and the end of the handle connecting member are fitted to each other.

The load absorbing member can comprise a resilient member that can be, for example, an coil spring.

According to these features, the resiliency of the handle connecting member at the plastic range exceeding the yield point can be, advantageously, maintained simply by adding the resilient member or the coil spring.

The occupant restraining device can further comprise a reinforcing member for limiting the amount of forward inclination of the handle connecting member.

According to this feature, since the amount of forward inclination of the handle connecting member is limited, the position of the restraining pad can be maintained at least at a predetermined height.

### BRIEF DESCRIPTION OF THE DRAWINGS

Fig. 1 is a side view of a scooter type motorcycle to which an occupant restraining device according to the present invention.
Fig. 2 is a front view showing an example of a handle to which a restraining pad is mounted.
Fig. 3 is a drawing showing a state in which the movement of an occupant is prevented by the restraining pad.
Fig. 4 is a cross-sectional view of a load absorbing member according to a first embodiment.
Fig. 5 is a cross-sectional view of the load absorbing member according to a second embodiment.
Fig. 6 is a cross-sectional view showing an example of a reinforcing member for limiting the angle of inclination of a handle pipe.
Fig. 7 is a front view showing another example of the handle to which the restraining pad is mounted.
Fig. 8 is a drawing showing a relation between the amount of movement of the restraining pad and a load applied to the occupant.

### DESCRIPTION OF THE EMBODIMENTS

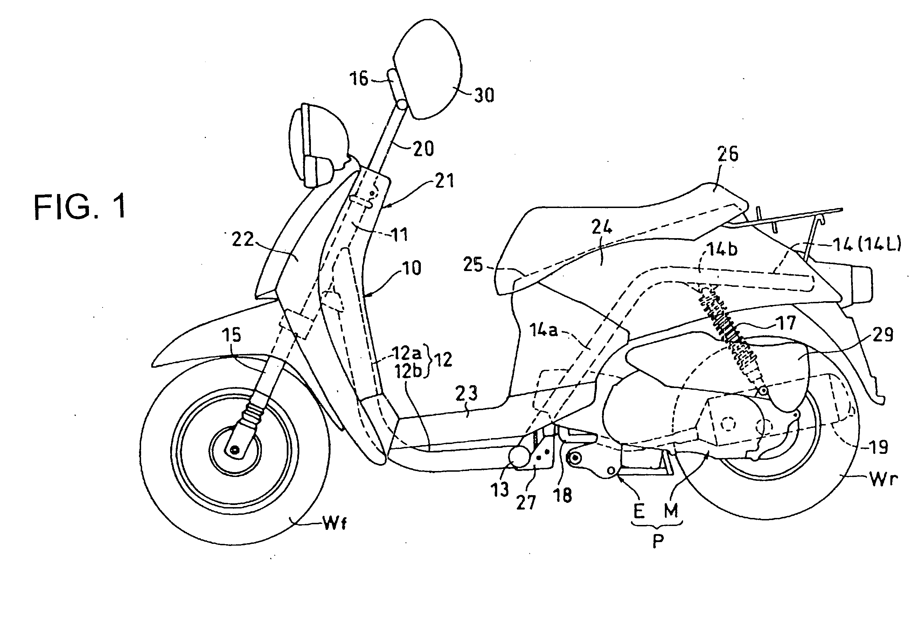

Referring now to the drawings, a preferred embodiment of the present invention will be described in detail. Fig. 1 is a side view of a scooter type motorcycle to which an occupant restraining device of the present invention is applied, in which a vehicle body frame 10 mainly includes a main frame pipe 12 provided with a head pipe 11 secured at the front end thereof, a cross pipe 13 secured to the rear end of the main frame pipe 12 at a right angle and horizontally, and a pair of left and right rear frame pipes 14 (14L, 14R) connected at the front ends thereof to the both ends of the cross pipe 13.

The main frame pipe 12 includes a down frame section 12a inclining downward toward the rear from the head pipe 11 and a lower frame section 12b extending rearward from the rear end of the down frame section 12a substantially horizontally integrally connected with each other. The cross pipe 13 extends laterally of the vehicle body frame 10, and the rear end of the main frame pipe 12 is secured to the center of the cross pipe 13 at a right angle. The pair of the left and right rear frame pipes 14 include rise frame sections 14a extending upward from both ends of the cross pipe 13 toward the rear, and upper frame portions 14b extending substantially horizontally from the rear ends of the rise frame sections 14a toward the rear and curved in a horizontal plane so that the rear end openings face each other integrally connected to each other.

A front fork 15 as a steering member for supporting a front wheel Wf is steerably supported by the head pipe 11, and a steering handle 16 is connected to the upper end of the front fork 15 via a handle pipe 20 as the handle connecting member. A power unit P including an engine E disposed in front of a rear wheel Wr and a stepless transmission M disposed on the left side of the rear wheel Wr are supported at the front portion of the rear frame pipe 14 so as to be capable of pivoting in the vertical direction, and the rear wheel Wr is journaled at the rear portion of the power unit P. An air cleaner 29 is disposed on the upper left side of the rear wheel Wr.

Provided between the rear portion of the power unit P and the left side of the rear frame pipe 14L is a rear cushion unit 17. An exhaust pipe 18 for introducing exhaust gas from the engine E extends from the engine E to the right side of the rear wheel Wr, and the exhaust pipe 18 is connected to an exhaust muffler 19 disposed on the right side of the rear wheel Wr. A storage box 25 is supported between the front portions of the left and right rear frame pipes 14 so as to be disposed above the engine E.

The vehicle body frame 10 is covered by a vehicle body cover 21 formed of synthetic resin, and the vehicle body cover 21 includes a leg shield 22 for covering the front side of the feet of the occupant, a step floor 23 continuing to the lower portion of the leg shield 22 for placing the feet of the occupant, and side covers 24 continuing from the step floor 23 for covering the rear portion of the vehicle body from both sides.

The storage box 25 and the fuel tank (not shown) are covered by the side cover 24, and a seat 26 for covering the storage box 25 from above is mounted to the upper portion of the side cover 24 so as to be capable of opening and closing. In other words, the step floor 23 is formed on the vehicle body cover 21 so as to be disposed between the steering handle 16 and the seat 26, and a frame-side bracket 27 is disposed downwardly of the rear end of the step floor 23 for pivotably supporting the power unit P to the vehicle body frame 10.

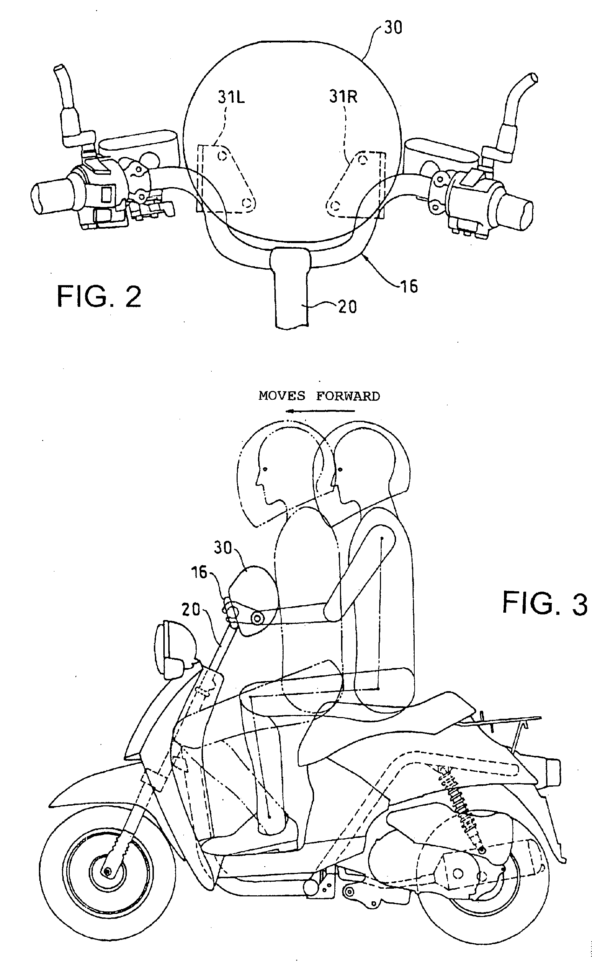

Referring also to Fig. 2, a pair of left and right plate members 31L, 31R are secured to the steering handle 16, and a restraining pad 30 is mounted to the plate members 31L, 31R so as to oppose to the occupant seated on the seat 26. With this restraining pad 30, as shown in Fig. 3, since the portion of the occupant near the breast is held by the restraining pad 30 even though the occupant moves forward due to the inertia when the brake is applied and hence further movement is prevented, the forward movement of the occupant is limited within a predetermined range. In this embodiment, a load absorbing member for absorbing a forward load when the forward load exceeding a predetermined reference value is applied to the restraining pad 30 and alleviating a load applied to the occupant is added to the handle pipe 20.

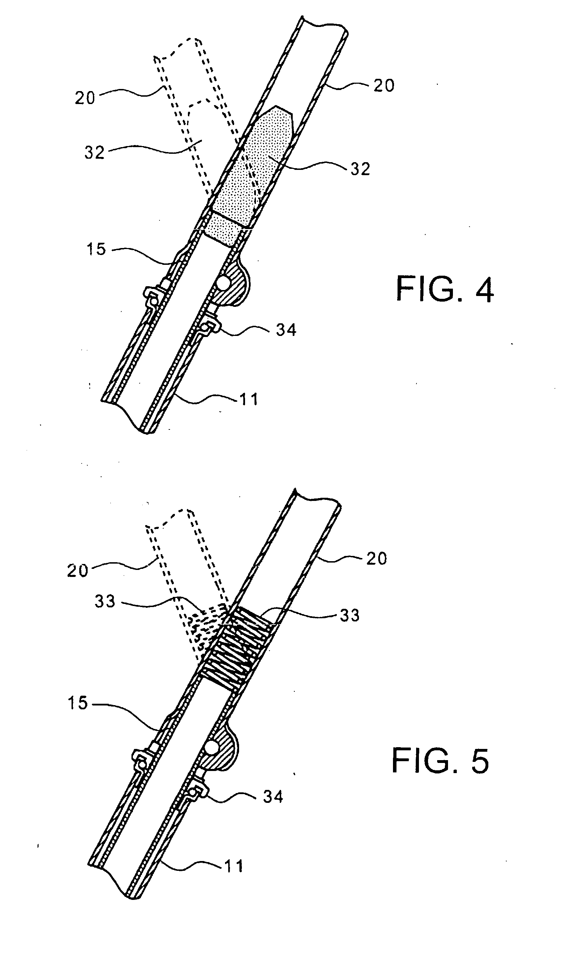

Fig. 4 is a cross-sectional view of the load absorbing member according to a first embodiment, in which the same reference numerals represent the same or equivalent parts.

A thick front fork 15 is inserted through the inside of the head pipe 11 and is steerably supported by a bearing member 34. The lower end of the handle pipe 20 having flexibility is inserted and fixed to the outside of the upper end of the front fork 15, and one end of an elongated resilient member 32 is inserted and fixed to the inside of the upper end of the front fork 15. The other end of the resilient member 32 is inserted into the inside of the handle pipe 20 simultaneously when the handle pipe 20 is inserted on the outer periphery of the upper end of the front fork 15.

In this structure, a forward load exceeding the predetermined reference value is applied to the restraining pad 30, the handle pipe 20 which is thinner than the front fork 15 starts to bend. When a stress exceeds a yield point (stress limit) of the handle pipe 20, the handle pipe starts plastic deformation, and as shown in the same drawing by a broken line, the handle pipe 20 starts to bend forward at a portion near the upper end of the front fork 15.

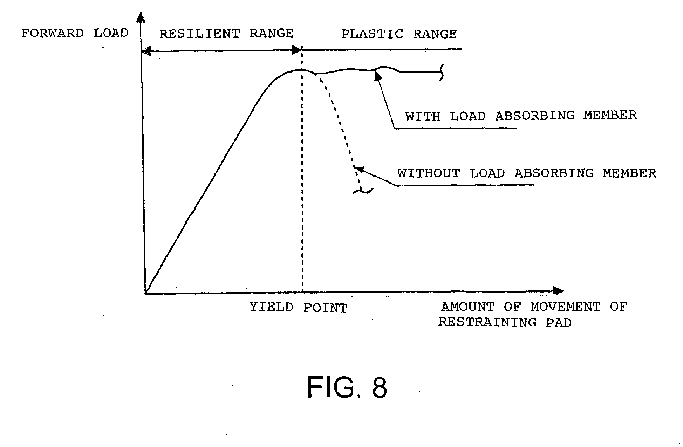

Fig. 8 shows a drawing showing a relation between the amount of forward movement of the restraining pad 30 and a load applied to the breast of the occupant. If the resilient member 32 is not inserted on the handle pipe 20, the handle pipe 20 is broken at a moment when the stress exceeds a yield point and hence it cannot maintain its resiliency as shown in the same drawing by a broken line, whereby the load exerted to the restraining pad 30 is released.

In contrast, in this embodiment, since the front fork 15 and the handle pipe 20 are connected firmly, and the both of them are connected also resiliently by the resilient member 32, the handle pipe 20 can maintain its resiliency in the plastic range exceeding the yield point. Therefore, the relation between the amount of forward movement of the restraining pad 30 and the load applied to the breast of the occupant can be maintained substantially constantly as shown in Fig. 8 by a solid line, even after the handle pipe 20 exceeds the yield point. Consequently, even when a load exceeding the stress limit of the handle pipe 20 is applied to the restraining pad 30, part of the load can be absorbed, and hence the load applied to the occupant can be reduced.

Fig. 5 is a cross-sectional view of the load absorbing member according to a second embodiment, and the same reference numerals represent the same or equivalent parts.

The upper portion of the thick front fork 15 is inserted into the inside of the head pipe 11, and is steerably supported by a bearing member 34. The lower end of the handle pipe 20 having flexibility is inserted and fixed to the outside of the upper end of the front fork 15, and a coil spring 33 is inserted into the inside thereof.

In this structure, when a forward load exceeding a predetermined reference value is applied to the restraining pad 30, the handle pipe 20, which is thinner than the front fork 15 starts to bend. When the stress exceeds a yield point (stress limit) of the handle pipe 20, the handle pipe 20 starts plastic deformation, and as shown in the same drawing by a broken line, the handle pipe 20 starts to bend forward at a portion near the upper end of the front fork 15. However, according to this embodiment, since the coil spring 33 is inserted into the bending portion of the handle pipe 20, the handle pipe 20 is not broken even when the stress exceeds its own yield points, and can maintain its resiliency.

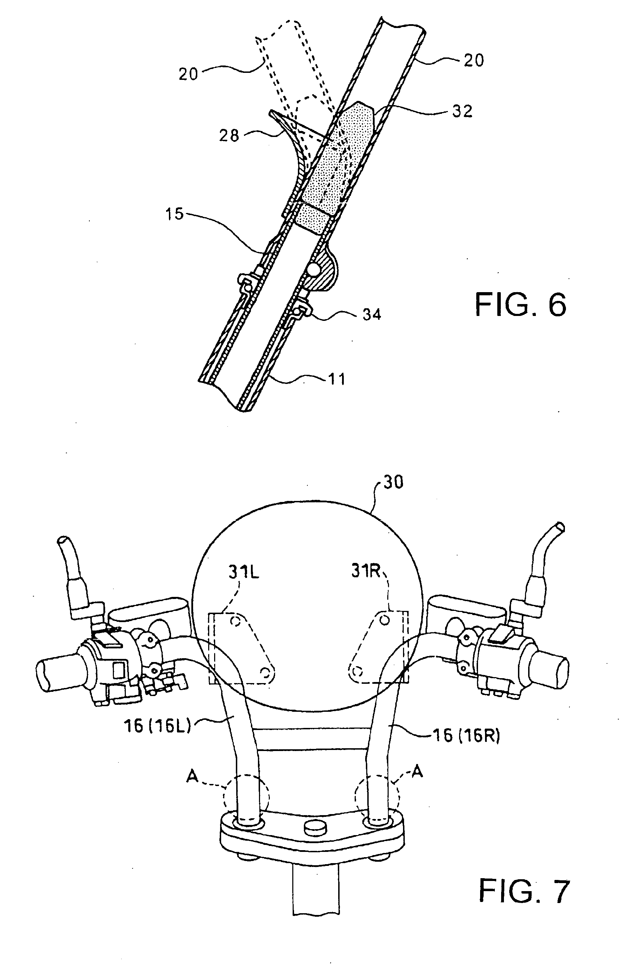

In the aforementioned respective embodiments, since the handle pipe 20 is bent about the portion near the upper portion of the front fork 15, the position thereof is lowered as the amount of the movement of the restraining pad 30 increases. Therefore, as shown in Fig. 6, in this embodiment, a reinforcing member 28 for limiting the angle of inclination of the handle pipe 20, or the amount of movement of the restraining pad 30 for the lower portion of the handle pipe 20 below the bent portion or for the head pipe 11. Accordingly, even when a significant forward load is applied to the restraining pad 30, the position of the restraining pad 30 can be maintained at least at the predetermined height.

In the aforementioned embodiment, a case in which the load absorbing member is provided on the handle pipe 20 for connecting the steering handle 16 and the front fork 15 has been described. However, the present invention is not limited thereto, and as shown in Fig. 7 as an example, the load absorbing members may be provided at root portions A of left and right handle members 16L, 16R surrounded by broken circles respectively as long as it is a two-wheel vehicle having a structure in which the handle 16 includes the pair of the left and right handles 16L, 16R and serves also as the handle pipe 20.

## Claims

1. Occupant restraining device for a two-wheel vehicle comprising:
a restraining pad (30) mounted to a handle (16) so as to oppose to the occupant;
a pipe-shaped steering member (15) steerably supported by a head pipe (11);
a pipe-shaped handle connecting member (20) for connecting the handle (16) with the steering member (15);
**characterized in that** the restraining device further comprises
a load absorbing member for absorbing a forward load applied to the restraining pad (30) and allowing the handle connecting member (20) to be plastically deformed so as to incline toward the front at a predetermined position.

2. Occupant restraining device for a two-wheel vehicle according to Claim 1, **characterized in that** the load absorbing member causes the handle connecting member (20) in the plastic range exceeding a yield point to maintain a predetermined resiliency.

3. Occupant restraining device for a two-wheel vehicle according to Claim 1 or 2, **characterized in that** the load absorbing member is inserted at one end into the steering member (15) and at the other end into the handle connecting member (20), and an end of the steering member (15) and an end of the handle connecting member (20) are fitted to each other.

4. Occupant restraining device for a two-wheel vehicle according to Claim 1 or 2, **characterized in that** the load absorbing member is inserted into the handle connecting member (20) inside the predetermined position thereof and the end of the steering member (15) and the end of the handle connecting member (20) are fitted to each other.

5. Occupant restraining member according to any one of Claims 1 to 4, in which the load absorbing member comprises a resilient member (32).

6. Occupant restraining member according to Claim 4, in which the absorbing member is a coil spring (33).

7. Occupant restraining device for a two-wheel vehicle according to any one of Claims 1 to 6, further comprising a reinforcing member (28) for limiting the amount of forward inclination of the handle connecting member (20).

## Patentansprüche

1. Insassenrückhaltevorrichtung für ein Zweiradfahrzeug, umfassend:
ein Rückhaltepad (30), das an einem Lenker (16) befestigt ist, so dass es dem Insassen gegenüberliegt;
ein rohrförmiges Lenkelement (15), das von einem Gabelrohr (11) lenkbar getragen wird;
ein rohrförmiges Lenker-Verbindungselement (20) zum Verbinden des Lenkers (16) mit dem Lenkelement (15);
**dadurch gekennzeichnet, dass** die Rückhaltevorrichtung ferner umfaßt
ein lastabsorbierendes Element zum Absorbieren einer Vorwärtslast, die auf das Rückhaltepad (30) wirkt und es dem Lenker-Verbindungselement (20) ermöglicht, plastisch deformiert zu werden, um sich an einer vorgegebenen Position nach vorne hin zu neigen.

2. Insassenrückhaltevorrichtung für ein Zweiradfahrzeug nach Anspruch 1, **dadurch gekennzeichnet, dass** das lastabsorbierende Element bewirkt, dass das Lenker-Verbindungselement (20) in dem plastischen Bereich, der eine Dehnungsgrenze überschreitet, eine vorgegebene Elastizität beibehält.

3. Insassenrückhaltevorrichtung für ein Zweiradfahrzeug nach Anspruch 1 oder 2, **dadurch gekennzeichnet, dass** das lastabsorbierende Element an einem Ende in das Lenkelement (15) und am anderen Ende in das Lenker-Verbindungselement (20) eingeführt ist, und dass ein Ende des Lenkelements (15) und ein Ende des Lenker-Verbindungselements (20) zueinander passend ausgebildet sind.

4. Insassenrückhaltevorrichtung für ein Zweiradfahrzeug nach Anspruch 1 oder 2, **dadurch gekennzeichnet, dass** das lastabsorbierende Element innerhalb dessen vorgegebener Position in das Lenker-Verbindungselement (20) eingeführt ist, und dass das Ende des Lenkelements (15) und das Ende des Lenker-Verbindungselements (20) zueinander passend ausgebildet sind.

5. Insassenrückhaltevorrichtung nach einem der Ansprüche 1 bis 4, bei der das lastabsorbierende Element ein elastisches Element (32) umfaßt.

6. Insassenrückhaltevorrichtung nach Anspruch 4, bei der das absorbierende Element eine Spiralfeder (33) ist.

7. Insassenrückhaltevorrichtung für ein Zweiradfahrzeug nach einem der Ansprüche 1 bis 6, ferner umfassend ein Verstärkungselement (28), um das Maß der Vorwärtsneigung des Lenker-Verbindungselements (20) zu beschränken.

## Revendications

1. Dispositif de retenue d'occupant pour un véhicule à deux roues, comprenant :
un patin de retenue (30) monté sur une poignée (16) afin de s'opposer à l'occupant ;
un élément de direction en forme de tube (15) supporté de manière dirigée par une tube de fourche (11) ;
un élément de raccordement de poignée en forme de tube (20) pour raccorder la poignée (16) avec l'élément de direction (15) ;
**caractérisé en ce que** le dispositif de retenue comprend en outre un élément d'absorption de charge pour absorber une charge avant appliquée sur le patin de retenue (30) et permettant à l'élément de raccordement de poignée (20) destiné à être déformé plastiquement de s'incliner vers l'avant dans une position prédéterminée.

2. Dispositif de retenue d'occupant pour un véhicule à deux roues selon la revendication 1, **caractérisé en ce que** l'élément d'absorption de charge permet à l'élément de raccordement de poignée (20) de maintenir une élasticité prédéterminée dans la plage plastique dépassant une limite d'élasticité.

3. Dispositif de retenue d'occupant pour un véhicule à deux roues selon la revendication 1 ou 2, **caractérisé en ce que** l'élément d'absorption de charge est inséré au niveau d'une extrémité dans l'élément de direction (15) et au niveau de l'autre extrémité dans l'élément de raccordement de poignée (20), et une extrémité de l'élément de direction (15) et une extrémité de l'élément de raccordement de poignée (20) sont ajustées l'une par rapport à l'autre.

4. Dispositif de retenue d'occupant pour un véhicule à deux roues selon la revendication 1 ou 2, **caractérisé en ce que** l'élément d'absorption de charge est inséré dans l'élément de raccordement de poignée (20) à l'intérieur de sa position prédéterminée et l'extrémité de l'élément de direction (15) et l'extrémité de l'élément de raccordement de poignée (20) sont ajustées l'une par rapport à l'autre.

5. Dispositif de retenue d'occupant selon les revendications 1 à 4, dans lequel l'élément d'absorption de charge comprend un élément élastique (32).

6. Dispositif de retenue d'occupant selon la revendication 4, dans lequel l'élément d'absorption est un ressort hélicoïdal (33).

7. Dispositif de retenue d'occupant pour un véhicule à deux roues selon l'une quelconque des revendications 1 à 6, comprenant en outre un élément de renforcement (28) pour limiter la quantité d'inclinaison vers l'avant de l'élément de raccordement de poignée (20).
